# EUROPEAN PATENT APPLICATION

(11) **EP 0 863 041 A2**
(43) Date of publication of application: **09.09.1998**
(21) Application number: 98106717.6
(22) Date of filing: 17.08.1995
(51) Int. Cl.: B60L 5/18, B60L 5/28

(54) **Current collecting method and current collector**

(30) Priority: 19.08.1994 JP 195147/94
(62) Divisional of application: 95305744.5
(71) Applicant: HITACHI, LTD., Chiyoda-ku, Tokyo 100 (JP)
(72) Inventor: Kakehi, Yutaka, Hikari-shi, Yamaguchi-ken (JP); Hara, Kuniyoshi, Kudamatsu-shi, Yamaguchi-ken (JP); Terada, Katsuyuki, Kudamatsu-shi, Yamaguchi-ken (JP); Makino, Toshiaki, Kudamatsu-shi, Yamaguchi-ken (JP); Kobayashi, Kenji, Kudamatsu-shi, Yamaguchi-ken (JP); Satoh, Yutaka, Kudamatsu-shi, Yamaguchi-ken (JP); Ohtani, Itutaroh, Kudamatsu-shi, Yamaguchi-ken (JP); Hattori, Morishige, Kudamatsu-shi, Yamaguchi-ken (JP)
(74) Representative: Paget, Hugh Charles Edward

(57) **Abstract**

This invention relates to a current collecting equipment for a high-speed railroad train and the object is to allow the contact strip to be moved to a large extent without rotating the contact strip and other associated devices and components

A contact strip 110 and a collector head 120 are mounted on a raise/lower device 200 through a load cell 226 The raise/lower device 200 is moved vertically by two raise/lower devices 300, 300. The two raise/lower devices 300 are installed in non- passenger spaces on both sides of an aisle 35 in the vehicle body 31. The cylinder devices 210, 310 of the raise/lower devices 200, 300 are supported by the guide devices 220, 320 so that their rods do not tilt. The guide device 320 is secured to the vehicle body. When current is not collected, the raise/lower devices 200, 300 are contracted to lower the contact strip 110. When electric current is collected, the height of the second raise/lower device 300 is controlled according to the height of the predetermined trolley wire 51, and the raise/lower device 200 is controlled so that the value measured by the load cell becomes equal to a specified value.

## Description

### BACKGROUND OF THE INVENTION

The present invention relates to a current collecting equipment for railway vehicles and more specifically to a controlled current collecting equipment for high-speed railway vehicles.

In current collecting equipment for high-speed railroad trains (hereinafter referred to simply as cars) such as Shinkansen, a contact strip of a current collecting member need to be pressed under a specified force against a trolley wire to prevent the current collecting member from parting from the trolley wire. To deal with this problem, EP-0605214A2 proposes the following current collecting equipment. This equipment is provided with a contact strip in contact with a trolley wire, a wing-shaped collector head for supporting the contact strip, an insulating insulator, a load cell for detecting the contact force of the contact strip against the trolley wire and a cylinder device, in that order from top to bottom. A conduction insulator is installed parallel with the cylinder device and the insulation insulator, and is connected to the contact strip with a conductive cable. The contact force of the contact strip against the trolley wire is measured using the load cell to extend or contract the cylinder device to keep the contact force between the contact strip and the trolley wire constant. When current is not collected, a mount that supports the cylinder device and the conduction insulator is rotated so that the axis of the cylinder device is parallel to the longitudinal direction of the trolley wire, thereby lowering the contact strip.

### SUMMARY OF THE INVENTION

When such a current collecting equipment is collecting current, the axis of the cylinder device is set parallel to the horizontal direction and, when collecting current, is rotated from the horizontal to the vertical direction. Hence, a conductive cable between the lower end of the conduction insulator and the vehicle body is largely bent and twisted. This conductive cable is for high-voltage and covered with an insulating material, which makes it difficult to bend the cable to a large extent. At the same time, bending the cable shortens its life.

The current collecting equipment of the railway car must be kept in contact with the trolley wire over the entire travel section. For example, (1) the height of the trolley wire in a repair shop is 4,700 mm (at this time the current collecting equipment must be able to contact the overhead wire); (2) the height of the trolley wire in a normal travel section (hereinafter referred to as a main track) is 4,800- 5,300 mm; and (3) when current is not collected (that is, the current collecting equipment is lowered), the height of the current collecting equipment must be 4,500 mm (vehicle limit) or lower. Thus, the current collecting equipment is required to move 800 mm vertically.

The cylinder device of the current collecting equipment therefore must be able to enable a large amount of vertical motion. Further, in response to variation in the lift acting on the wing-shaped collector head and to variation in the overhead wire height, the cylinder device must repeat raising and lowering the contact strip in short cycles.

The contact strip and the wing-shaped collector head are subjected to a large force in the travel direction of the vehicle. Thus, the cylinder device must be able to resist this force.

Immediately after the vehicle enters or comes out of a tunnel, it has been found that a large lift variation occurs in the current collecting equipment.

A first object of this invention is to allow the contact strip to be raised and lowered without rotating the raise/lower device.

A second object of this invention is to prevent the contact strip from parting from or cutting the trolley wire.

A third object of this invention is to ensure a good current collecting operation even immediately after the vehicle enters or comes out of a tunnel.

A fourth object of this invention is to prolong the life of a conduction means that connects the contact strip and the conduction insulator.

A fifth object of this invention is to ensure a large vertical motion.

A sixth object of this invention is to provide a current collecting equipment whose overall height can be reduced when the contact strip is lowered.

The first object of this invention can be achieved by:
raising/lowering a first raise/lower device to vertically raise/lower a second raise/lower device and a contact strip mounted on the second lift device;
detecting the contact force of the contact strip against the trolley wire with a load cell; and
controlling the vertical motion of the second raise/lower device according to the detected value.

The second object of the invention can be achieved by:
determining the traveling position of the vehicle;
based on the traveling position thus determined,
   reading a target height of the contact strip in respect to the traveling position of the vehicle;
   and
controlling the vertical motion of the raise/lower device supporting the contact strip according to the target height.

The third object can be achieved by stopping the vertical motion of the contact strip-supporting raise/lower device for a predetermined duration of time after the contact strip enters or comes out of a tunnel.

A fourth object can be achieved by providing a current collecting equipment which comprises a contact strip, a first raise/lower device to raise/lower the contact strip through an insulation insulator, a conduction insulator arranged in parallel with at least either the first raise/lower device or the insulation insulator, a conduction means for connecting the conduction -insulator and the contact strip, and two second raise/lower devices for raising/ lowering the first raise/lower device;
wherein the second raise/lower devices are installed inside the vehicle body, one on each side of a crew passage.

A fifth object of this invention can be achieved by providing a current collecting equipment which comprises a contact strip,
a first raise/lower device for raising/lowering the contact strip through an insulation insulator, a conduction insulator arranged in parallel with at least one of the first raise/lower device and the insulation insulator, a conduction for connecting the conduction insulator and the contact strip, and a second raise/lower device for raising/lowering the first raise/lower device and the conduction insulator simultaneously or individually.

Preferably the second raise/lower device includes parallel arranged two raise/lower devices.

Preferably the first raise/lower device is disposed between the two second raise/ devices and suspended from a mount raised and lowered by the two raise/lower devices, and an extendible member of the first raise/lower device passes through the mount and supports the insulation insulator.

A sixth object of this invention can be achieved by raising/lowering the insulation insulator supporting the contact strip by the operation of the first raise/lower device; and
raising/lowering the insulation insulator or the conduction insulator arranged parallel with the first raise/lower device by the second raise/lower devices in synchronism with the vertical motion of the first raise/lower device.

According to a means for achieving the first object of this invention, the second raise/lower devices and the first raise/lower device move the contact strip vertically. Therefore, although the conductive cable between the current collecting equipment and the vehicle body is bent, the amount of this bend can be made significantly smaller than that caused when the current collecting equipment is rotated. This prevents degradation of insulation characteristic of the conductive cable, and consequently prolongs its life.

According to a means for achieving the second object of this invention, a predetermined target height of the contact strip at a traveling position is read out and, based on this target value, the amount of vertical motion of the raise/lower device is determined, so that the contact strip can be prevented from parting from or breaking the trolley wire. More reliable prevention of the contact strip from parting from or breaking the trolley wire is ensured by detecting the contact force of the contact strip against the trolley wire or the distance to the trolley wire and by controlling the extension and contraction of the raise/lower device so that the detected value equals the predetermined value.

According to a means for achieving the third object of this invention, the operation of the raise/lower device for the contact strip is stopped for a predetermined duration of time after the contact strip enters a tunnel or after the contact strip has come out of the tunnel, so that when the train enters or comes out of the tunnel, the contact strip can be prevented from being moved vertically by abrupt lift variation caused by strong pressure waves. This in turn prevents the contact strip from parting from or breaking the trolley wire. The stop of the operation of the raise/lower device may be done in a certain section of the railway track rather than for a certain duration of time.

According to a means for achieving the fourth object of this invention, the second raise/lower devices are installed on both sides of the aisle in the vehicle body, so that a large vertical motion of the raise/lower devices can easily be ensured without being an obstacle to passengers.

According to a means for achieving the fifth object of this invention, when the first raise/lower device and the second raise/lower devices are lowered, they are situated parallel with each other, reducing the height of the current collecting equipment and also the amount of cut for install the current collecting device in the upper part of the vehicle body.

According to a means for achieving the sixth object of this invention, the contact strip and the conduction insulator are vertically moved by separate raise/lower devices, so that the heights of the contact strip and conduction insulator can be set almost constant, thus reducing the bend of a conduction means that connects the contact strip and the conduction insulator and prolonging the life of the conduction means.

### BRIEF DESCRIPTION OF THE DRAWINGS

Figure 1 : A front view of a current collecting equipment of a first embodiment of this invention.

Figure 2 : A side view of a train when electric current is collected by the current collecting equipment of Figure 1.

Figure 3 : A plan view of the current collecting equipment of Figure 1.

Figure 4 : A vertical cross section of a cylinder device of a second raise/lower device of the current collecting equipment of Figure 1.

Figure 5 : A vertical cross section of one end of the second raise/lower device of the current collecting equipment of Figure 1.

Figure 6 : A front view of a mount of the current collecting equipment of Figure 1.

Figure 7 : A plan view of the left-end portion of Figure 6.

Figure 8 : A right-hand side view of the right-end portion of Figure 6.

Figure 9 : A vertical cross section of a first raise/lower device of the current collecting equipment of Figure 1.

Figure 10 : A hydraulic circuit diagram of the current collecting equipment of Figure 1.

Figure 11 : A block diagram of a control circuit of the current collecting equipment of Figure 1.

Figure 12 : An operation flow chart of a controller of the current collecting equipment of Figure 1.

Figure 13 : A waveform diagram used to explain the operation of the raise/lower device of the current collecting equipment of Figure 1 when the train travels through a tunnel.

Figure 14 : A vertical cross section of a current collecting equipment of another embodiment of this invention.

Figure 15 : A plan view of Figure 14.

Figure 16 : A side view of a raise/lower device of the current collecting equipment of Figure 14.

Figure 17 : A plan view of Figure 16.

Figure 18 : A cross section taken along the line 18-18 of Figure 17.

Figure 19 : A vertical cross section of a first raise/lower device of the current collecting equipment of Figure 14.

Figure 20 : A vertical cross section taken along the line 20-20 of Figure 14.

Figure 21 : A plan view of Figure 20.

### DESCRIPTION OF THE PREFERRED EMBODIMENTS

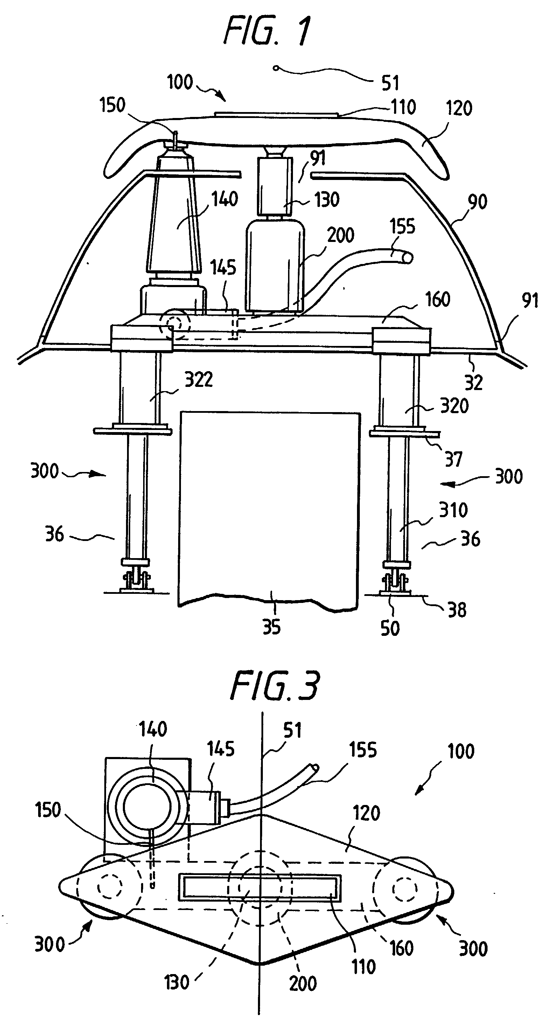

Now, one embodiment of this invention will be described referring to Figure 1 through Figure 13.

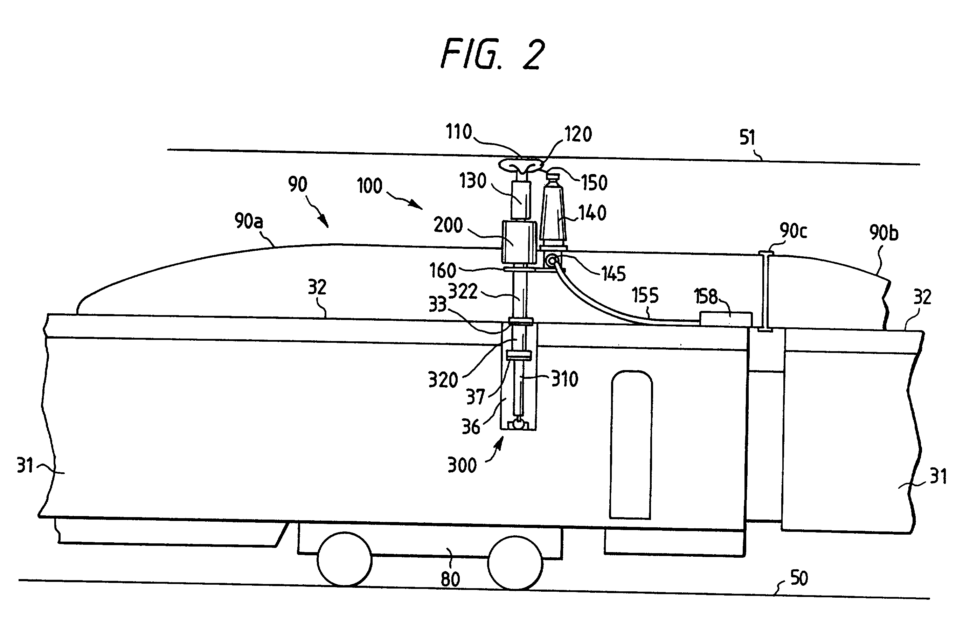

In Figure 2, a current collecting equipment 100 is installed at a longitudinal end of a vehicle body 31, i.e., on a roof 32 near a truck 80 that supports the vehicle body 31. On the roof 32 is mounted a containing dome 90 that encloses the lower part of the current collecting equipment 100. The containing dome 90 is divided in two separate parts, mounted one on the vehicle body 31 having the current collecting equipment 100 and one on an adjacent vehicle body 31. The two containing domes 90a, 90b are in contact with each other through an expandable member 90c. The containing dome 90 is so formed that the height and width progressively decrease toward the longitudinal ends. The current collecting equipment 100 is located at the longitudinal center of the containing dome 90. Two current collecting equipments 100 are installed in one train at an interval of at least about 100 m.

The current collecting equipment 100 comprises: a contact strip 110 as a current collecting member which is in contact with the trolley wire 51 to collect current; a wing-shaped collector head 120 that supports the contact strip 110 and covers the lower part thereof; a first raise/lower device 200 for vertically move the collector head 120; an insulation insulator 130 installed between the collector head 120 and the first raise/lower device 200; a conduction insulator 140 arranged parallelly with the first raise/lower device 200 and the insulation insulator 130; a mount 160 on which the first raise/lower device 200 and the conduction insulator 140 are mounted; a conductive cable 150 for electrically connecting an upper-end conductive portion of the conduction insulator 140 and a lower-end conductive portion of the collector head 120; and second raise/lower devices 300 that drives the mount 160 vertically. The second raise/lower devices 300 are installed in a cut portion of the roof 32.

Electricity collected by the contact strip 110 is led through the collector head 120, conductive cable 150 as a conducting means, conduction insulator 140 and conductive cable 155 to a connector 158 mounted on the roof 32. The connector 158 is connected to a known conductive cable (not shown). The conductive cable 150 may be the one without an insulation cover covering its circumferential surface. The conduction insulator 140 comprises a conductive member covered with an insulator around its circumferential surface and is also called a cable head. The lower end of the conductive portion of the conduction insulator 140 is connected to the conductive cable 155 covered with insulator through an insulated L-shaped connector 145. The conductive cable 155 can be bent. To reduce the bend of the conductive cable 155 and facilitate the bend, the distance between the connectors 145 and 158 is set large. The parts below the insulation insulator 130 and the conduction insulation 140 are insulated by these insulators.

Through the operation of first raise/lower device 200, the insulation insulator 130, the collector head 120 and the contact strip 110 are raised/lowered. At this time, the conduction insulator 140 is not moved vertically. Hence, the conductive cable 150 is bent following the vertical motion of the collector head 120. The mount 160 on which the insulation insulator 130 and conduction insulator 140 are mounted is moved up and down by the second raise/lower device 300. Figure 2 shows the second raise/lower device 300 raised to the upper end. The first raise/lower device 200 is also raised to bring the contact strip 110 into contact with the trolley wire 51 with a specified force.

Generally, the standard height of the trolley wire 51 from the track 50 of the service operation railway line (main track) is 5,000 mm, and the allowable error is from -200 mm to +300 mm. That is, the height of overhead wire is from 4,800 mm to 5,300 mm. In repair shops, the height of the overhead wire is 4,700 mm. The height gradually changes from a repair shop to a main track. When the current is not collected, i.e., when the current collecting equipment 100 is lowered, the height from the upper surface of the contact strip 110 down to the track 50 is 4,500 mm (train limit height). Therefore, the required amount of vertical movement of the current collecting equipment 100 is 800 mm.

Two raise/lower devices 200, 300 are provided because it is difficult for a single raise/lower device to ensure the required vertical motion of 800 mm, to press the contact strip 110 against the trolley wire 51 with a specified force irrespective of lift variation of the contact strip 110 and the force of the trolley wire 51 acting on the contact strip 110, and to raise or lower the current collector at a specified speed (frequency). The second raise/lower device 300 is used mainly to vertically move the first raise/lower device 200 and the conduction insulator 140 to a specified height while the train is traveling on a main track. The first raise/lower device 200 is for pressing the contact strip 110 against the trolley wire 51 with a specified force. The amounts of vertical movement of the raise/lower devices 200, 300 are 100 mm and 700 mm, respectively. A hydraulic cylinder 310 of the second raise/lower device 300 lowers its rod (not shown) to the lowest position while the current collector does not collect current; while traveling on a main track, the cylinder fully raises the rod; and while moving from the repair shop to a main track, the cylinder a little raises the rod. The first raise/lower device 200 operates to bring the contact strip 110 into contact with the trolley wire 51 with a specified force while the train is traveling on the main track with the second raise/lover device 300 raised.

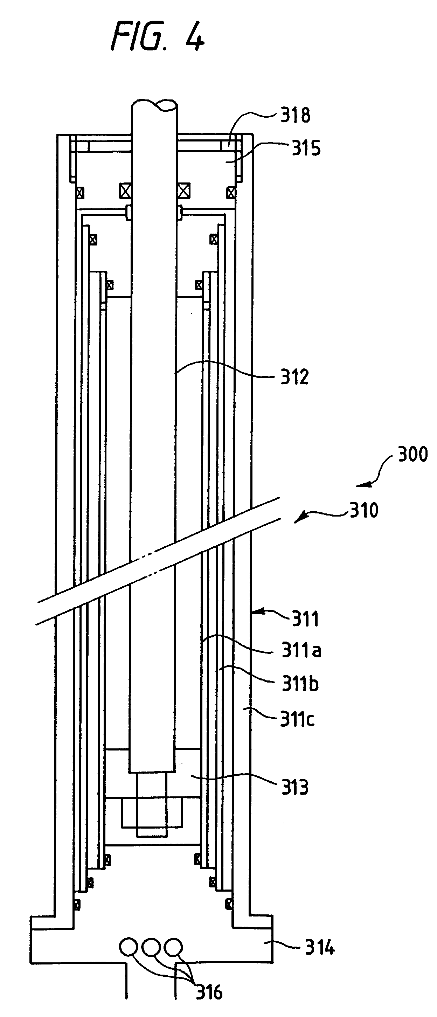

In Figure 3, the contact strip 110 is mounted on the collector head 120 through a spring (not shown) as well known. The collector head 120 is shaped like a wing and relatively thick in the vertical direction. The leading edge is a triangular projecting in the direction of travel. Because a train travels in opposite directions, it is symmetrical in the longitudinal direction and shaped like a rhombus. The contour and thickness of this diamond are determined so as to reduce noise.

The insulation insulator 130 and the first raise/lower device 200 are located at the central portion, in the direction of the width of the collector head 120 (in the direction of the width of the vehicle body 31). The contact strip 110 and the collector head 120 are so arranged that they are aligned with the central portion. The conduction insulator 140 is off the central portion with respect to the insulation insulator 130 both in the width and travel directions. The conductive cable 150 is arranged parallel to the direction of travel.

Figure 1 shows the state when current is not collected. In this state the raise/lower devices 200, 300 are contracted most. At this time, if the trolley wire 51 is positioned at the lowest height (4700 mm), the distance from the trolley wire 51 to the contact strip 110 is 200 mm. The collector head 120 projects from the containment dome 90. The containing dome 90 has holes in the top, through which the first raise/lower device 200 and the conduction insulator 140 can protrude. The holes 91 are larger in outside diameter than the first raise/lower device 200 and the conduction insulator 140 and are concentric with them. The outside diameter of the insulation insulator 130 is smaller than that of the first raise/lower device 200. The hole for the conduction insulator 140 is not shown. The containing dome 90 is provided with a drain hole 91. The second raise/lower device 300 consists of two raise/lower devices 300, 300, which are installed one on each side of a aisle 35 in the central portion of a coach car. These parts should preferably be not the space 36 for passengers. The installation places of the two raise/lower devices 300, 300 may include a toilet, an area near the entrance in the side of the vehicle body and an area near a buffet, all located where the raise/lower devices are no obstacles to passengers, ie., in the non-passenger space 36.

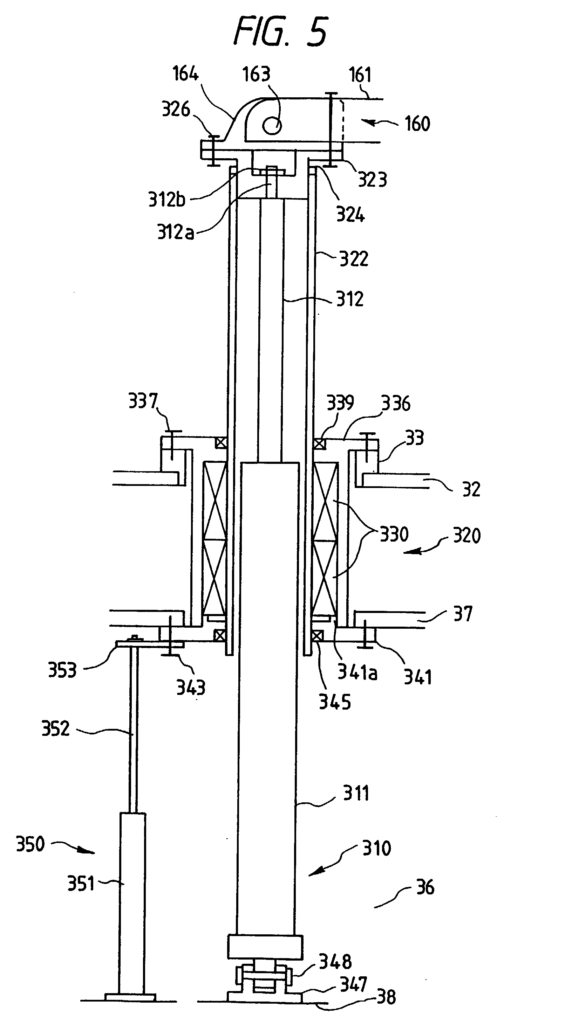

The second raise/lower device 300 will be explained in detail referring to Figure 5. The second raise/lower devices 300 each comprise a hydraulic cylinder device 310 that extends and contracts its rod 312 upwardly and a guide device 320 that guides the rod 312 as it extends and contracts. The guide device 320 ensures that the rod 312 is moved vertically without inclination. The lower end of the hydraulic cylinder device 310 is secured to a mounting seat 38 of the vehicle body 31 in the non-passenger space 36.

The upper and lower ends of the guide device 320 are secured to mounting seats 33, 37 of the vehicle body 31. The guide device 320 comprises a cylinder 322 larger in diameter than the cylinder 311 of the hydraulic cylinder device 310, a known linear guide device 330 in contact with the outer surface of the cylinder 322, and a cylinder 335 of a larger diameter accommodating the linear guide device 330.

The upper end of the cylinder 322 is fixedly screwed in the outer surface of a mounting seat 323 fixed to the upper end of the rod 312. Denoted 324 is a lock nut. The cylinder 322 is so arranged as not to be inclined with respect to the mounting seat 323. The mounting seat 323 is secured to the mount 160 with bolt and nut 326. A small-diameter threaded portion 312a at the upper end of the rod 312 passes through the mounting seat 323. A nut 312b is screwed in the threaded portion 312a to fix the mounting seat 323.

The cylinder 335 has its upper end secured to the mounting seat 33 provided to the roof 32 and its lower end secured to a mounting seat 37 in the non-passenger space 36. The cylinder 335 is inserted from above the roof 32, placed on the mounting seat 33 through an upper flange 336 and fixed with bolts 337. The upper surface of the mounting seat 33 is disposed above the drain hole 91. The contact surface between the mounting seat 33 and the upper flange 336 is provided with a water-proof packing (not shown). The contact surface between the upper end of the cylinder 335 and the cylinder 322 is provided with an oil seal 339.

Inside the cylinder 335 are installed a known linear guide device 330 that guides and supports the cylinder 322 vertically. The lower end of the cylinder 335 is secured with bolts and nuts 343 to the mounting seat 37 in the non-passenger space 36 through a mounting seat 341. A protruded portion 341a of the mounting seat 341 is in contact with the inner surface of the cylinder 335. The linear guide device 330 is in contact with the inner surface of the cylinder 335. The linear guide device 330 is clamped between a stepped portion 335a of the cylinder 335 and the mounting seat 341. Denoted 345 is an oil seal.

The lower end of the cylinder 311 is rotatably coupled to a bracket 347 attached to the mounting seat 38 in the non-passenger space 36 with a pin 348. The pin 348 has a spherical bushing. With this construction, the hydraulic cylinder device 310 can be rotated in the travel and width directions.

Referring to Figure 4, the construction of the hydraulic cylinder device 310 will be explained. A cylinder head 314 of the hydraulic cylinder device 310 on the piston 313 side is provided with three oil ports 316 in its side. The cylinder 311 of the hydraulic cylinder device 310 consists of three cylinders. An inner cylinder 311a accommodates the piston 313 and the rod 312. One of the oil ports 316 in the cylinder head 314 communicates with the interior of the inner cylinder 311a. Formed between the inner cylinder 311a and an intermediate cylinder 311b is a passage that connects a chamber on the rod 312 side and one of the oil ports 316. Between the intermediate cylinder 311b and an outer cylinder 311c is a drain passage for oil leaking from between a cylinder head 315 on the rod 312 side and the rod 312. This drain passage communicates with another oil port 316. The cylinder head 314 has holes (not shown) that connect the interiors of the cylinder 311a, 311b, 311c to the three oil ports 316. A hole is formed in inner cylinder 311a near the cylinder head 315 to connect its interior and exterior. The cylinder head 314 on the piston 313 side is fixed to the outer cylinder 311c with bolts and nuts (not shown). The cylinder head 315 is screwed into the outer cylinder 311c and fixed with a fixing nut 318. The inner cylinder 311a and the intermediate cylinder 311b are clamped by stepped portions of the two cylinder heads 314, 315. Oil seals are installed at the contact portions between the cylinder heads 314, 315, the cylinders 311a, 311b, 311c and the rod 312.

Because passages connecting the chamber on the rod 312 side and the lower end are formed by forming the cylinder 311 in a multi-cylinder structure, oil can be supplied to the chamber on the rod 312 side even if the guide device 320 is slidably arranged on the outside of the cylinder 311, If the oil leakage passage is not formed, the cylinder 311 may a double cylinder. When the cylinders 322, 335 of the guide device 320 are included, a total of at least five cylinders are used.

Designated 350 is a known length measuring device to detect the amount of projection of the rod 312 of the hydraulic cylinder device 310. The length measuring device 350 may for example be a known magnet scale, which comprises a cylinder 351 having a plurality of magnets arranged in the longitudinal direction and a steel rod 352 inserted into the cylinder 351. The cylinder 351 is mounted to the mounting seat 38 and the metal rod 352 is suspended from the lower end of the cylinder 322. Denoted 353 is an arm attached to the cylinder 322. The length measuring device 350 need only to be provided to at least either of the two second raise/lower devices 300, 300.

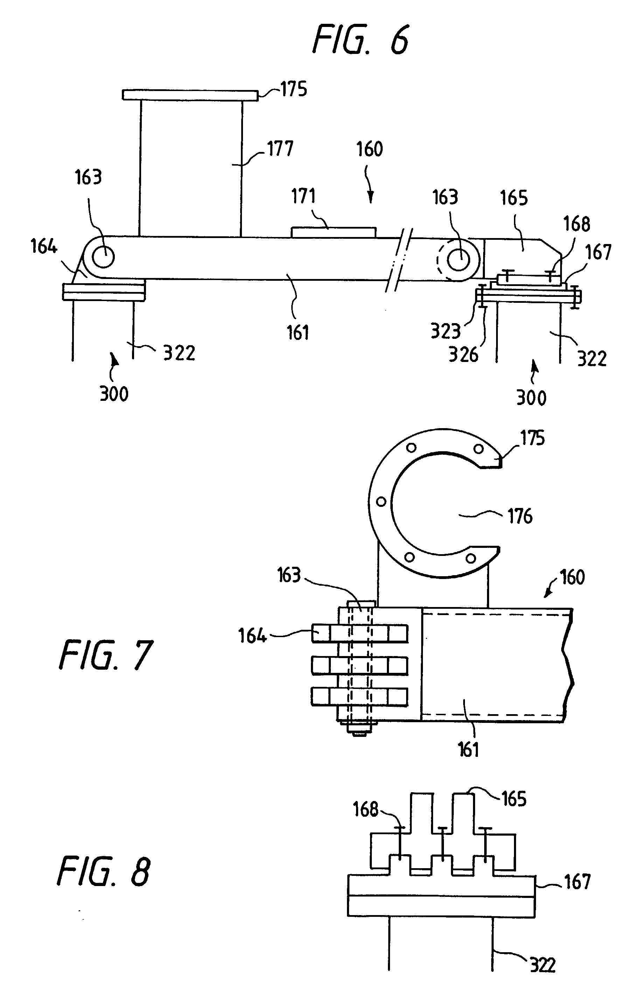

Details of the mount 160 will be described referring to Figure 6 to 8. The mount 160 comprises a base 161 on which the first raise/lower device 200 and the conduction insulator 140 are mounted, and mounting seats 164, 165 coupled to the longitudinal ends of the base 161 with pins 163, 163. The mounting seat 164 on one end is fixed so that it is not movable in respect to the mounting seat 323. The mounting seat 165 on the other end is fixed in such a way that it can be moved in the longitudinal direction of the mount 160 in respect to the mounting seat 323 on that end side. A sliding seat 167 is fixed to the upper surface of the mounting seat 323. The mounting seat 165 is placed on the sliding seat 167 and fixed with bolts 188. The sliding seat 167 has a plurality of rails on the upper surface, and the mounting seat 165 also has a plurality of rails matching with the rails of the sliding seat 167.

The difference between two distances, the distance between the mounting seats 33 and 33 on the roof 32 side and the distance between the mounting seats 164 and 165 on the mount 160 side is tolerated by the sliding motion between the mounting seat 165 and the sliding seat 167 and by the rotation of the pins 163, 163. This difference is caused by manufacturing errors and by thermal deformation due to temperature difference during traveling. The mount 160 is formed of a similar material (aluminum) to that of the vehicle body 31 to reduce thermal deformation due to temperature difference. Because the mount 160 is raised and lowered by the two hydraulic cylinder devices 310, there is a difference in the amount of vertical motion between the ends. This difference is tolerated by the rotation about the pins 163, 163.

A mounting seat 175 for the conduction insulator 140 has a hole 176 for the insertion of the L-shaped connector 145 in the horizontal direction.

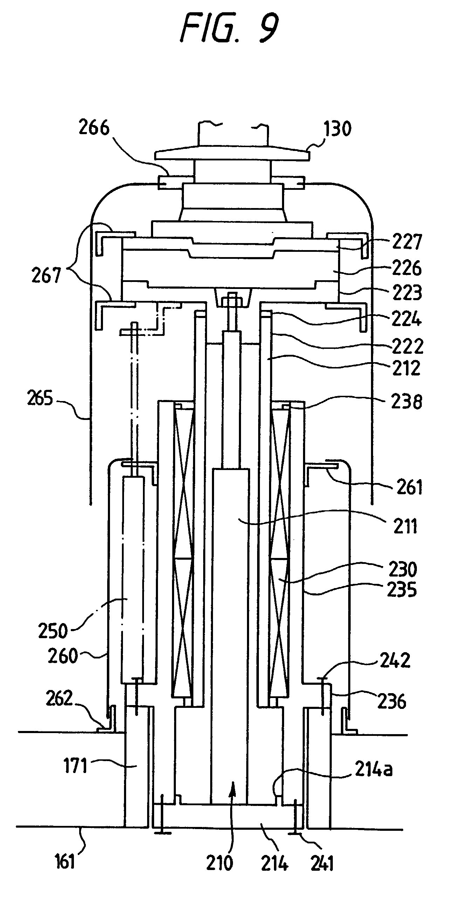

Referring to Figure 9, details of the first raise/lower devise 200 will be explained. Figure 9 shows the first raise/lower device 200 raised to an intermediate position. The first raise/lower device 200 comprises a hydraulic cylinder device 210 that drives a rod 212 upwardly, and a guide device 220 that guides the rod 212 as it expands and contracts. The basic constructions of the hydraulic cylinder device 210 and the guide device 220 are substantially the same as those of the hydraulic cylinder device 310 and the guide device 320.

A cylinder 211 of the hydraulic cylinder device 210 comprises three cylinders. In the side of the cylinder head 214 at the lower end of the cylinder there are three oil ports (not shown). The object and construction of the three cylinders and the three oil ports are the same as those of the hydraulic cylinder device 310.

The guide device 220 comprises a cylinder 222 larger in diameter than the cylinder 211, a known linear guide device 230 in contact with the outer surface of the cylinder 222, and a cylinder 235 with a still larger diameter accommodating the linear guide device 230. The cylinder 235 is placed on the cylinder head 214 and fixed by bolts 241. The cylinder 235 is positioned through a raised portion 214a of the cylinder head 214. The linear guide device 230 is inserted from above of the cylinder 235 onto a stepped portion 235a and is fixed by a stop ring 238. The linear guide device 230 is in contact with the cylinders 235, 222. A flange 236 of the cylinder 235 is placed on a cylindrical seat 171 of the base 161 and is fixed by bolts 242. Parts below the flange 236 are inserted in the cylindrical seat 171.

The upper end of the cylinder 222 is screwed into a mounting seat 223 secured to the upper end of the rod 212. Denoted 224 is a lock nut.

Stacked on the mounting seat 223 are a load meter 226 and a mounting seat 227 for the insulation insulator 130, which are tightly fastened together by bolts and nuts 229. The load cell 226 measures a reaction force produced when a push-up force is exerted on the hydraulic cylinder device 210. A small-diameter threaded portion 212a at the upper end of the rod 212 passes through the mounting seat 223. A nut 212b is screwed into the small-diameter threaded portion 212a to fix the nut 212b the mounting seat 223. Fitting portions for positioning are provided between the mounting seat 223 and the load cell 226, between the load cell 226 and the mounting seat 227, and between the mounting seat 227 and the insulation insulator 130. The mounting seat 227 is secured to the insulation insulator 130.

The middle and lower parts of the cylinder 235 is covered with a windshield cover 260, which is split in two. The windshield cover 260 is fixed by screws (not shown) to seats 261, 262 provided on the side surface of the cylinder 235 and on the upper part of the base 161. The windshield cover 260, when viewed from above, is shaped like an oval elongate in the direction of travel.

A windshield cover 265 covers from the lower part of the insulation insulator 130 down to the top of the windshield cover 260. The windshield cover 265 is split into two parts. The windshield cover 265 is secured by screws (not shown) to seats 267, 267 provided to the mounting seat 227. The upper end of the windshield cover 265 is secured to the lower part of the insulation insulator 130 through a rubber packing 266. The windshield cover 265, when viewed from above, is shaped like an oval elongate in the direction of travel. A water-proofing sealing agent is applied to the connecting portion of the covers 260, 265.

Designated 250 is a length measuring device that measures the amount of projection of the rod 312 of the hydraulic cylinder device 210 and is provided between the flange 236 and the mounting seat 223. The measuring device 250 is similar to the measuring device 350. The measuring device 250 is inside the windshield cover 260 and is enclosed by the covers 260, 265. The measuring device 250 is installed on the travel direction side of the vehicle with respect to the cylinder 235. The lead wires (not shown) of the load cell 226 and the measuring device are led out from the side of the cover 260.

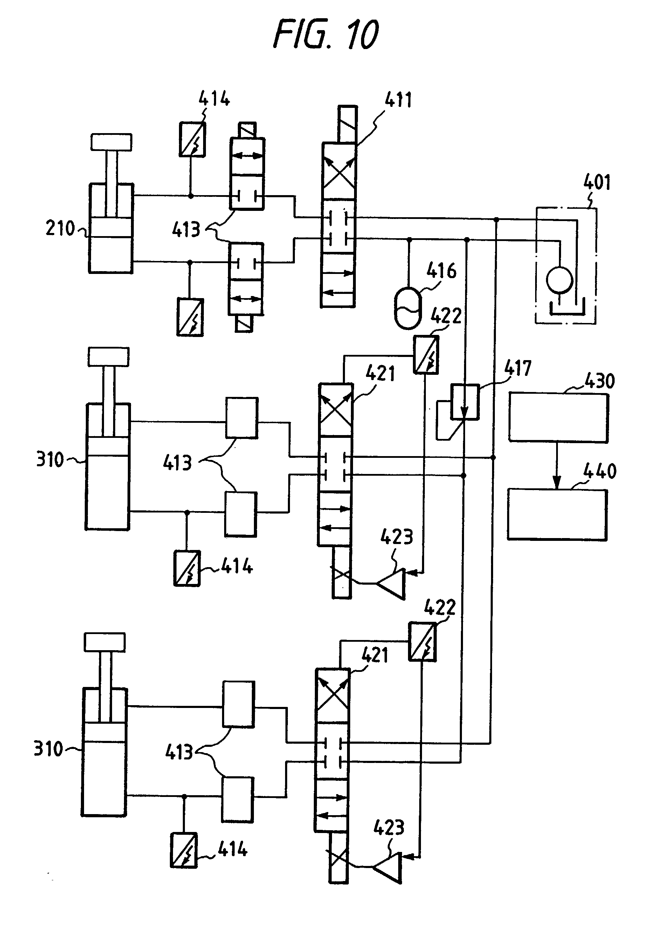

Referring to Figure 10, a hydraulic control circuit of the hydraulic cylinder devices 210, 310, 310 will be described. Denoted 401 is a known hydraulic pressure source 401 installed at the lower part of the vehicle body 31. Reference numeral 411 denotes a 4-way servovalve 411 that switches the working-fluid supply and discharge passages for working-fluid supplied to the hydraulic cylinder device 210 and regulates the flow rate. Designated 413 is a solenoid check valve; 414 a pressure gauge that corrects the flow rate of fluid supplied to the single-rod hydraulic cylinder devices 210, 310; 416 an accumulator that reduces variation in hydraulic pressure delivered from the hydraulic pressure source 401; and 417 a relief valve for preventing overload of the hydraulic cylinder devices 210, 310, 310.

Denoted 421 is a solenoid proportional valve 421 that switches the fluid supply and discharge passages for fluid supplied to the hydraulic cylinder device 310 and regulates the flow rate. Reference number 422 denotes a feedback pressure gauge of the solenoid proportional valve 421. An amplifier circuit 423 for the 4-way servo valve 411 corrects the position controlled variable fed from a control device 440 according to the detected value of the feedback pressure gauge 422.

Designated 430 is an operation controller that sends information on the current position of the train (in a tunnel section or in a non-tunnel section (or a bright section)) and on the traveling speed (information about whether the speed is high or low) to the control device 440. The operation controller 430 is mounted on the train. The control device 440 receives analog signals from the sensors 226, 250, 350, 412, 414, calculates from the detected value of the load cell 226 an estimated contact force against the trolley wire 51, performs calculation of position signals from the measuring devices 250, 350, and gives to the 4-way servo valve 411 and solenoid proportional valves 421, 421 the controlled variables of force and position that are determined by using the controlled variables of deviations of the contact force and position from their target contact force and position. When performing the control of force of the hydraulic cylinder device 210, the two solenoid check valves 413 are opened and the 4-way servo valve 411 is switched to one side. When not performing the force control, i.e., when the contact strip 110 is disposed within the train limit height, the position is controlled to perform a position determination operation. To determine the positions of the hydraulic cylinder devices 310, 310, the four solenoid check valves 413 are opened and the two solenoid proportional valves 421 are each switched to one side.

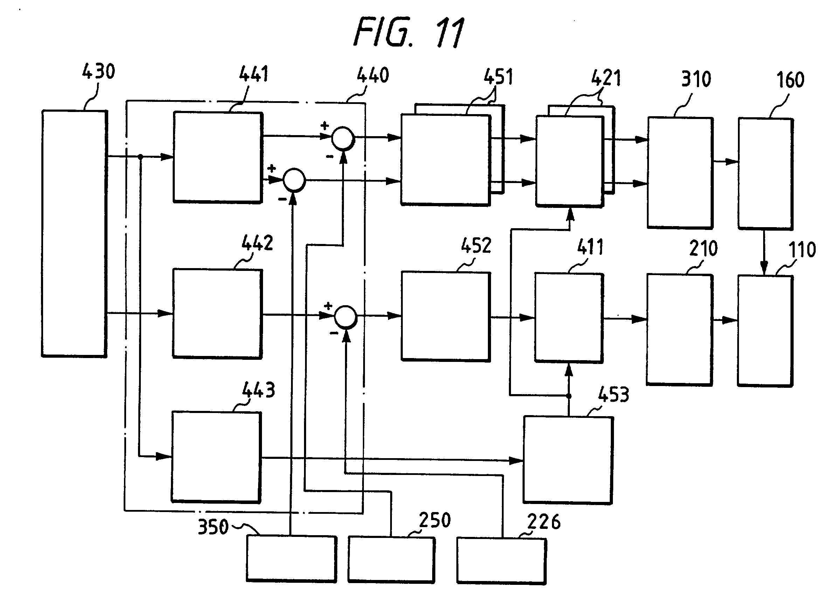

The configuration of the control device 440 will be explained with reference to Figure 11. The control device 440 has a position determination pattern 441 for positioning and operating the hydraulic cylinder device 310, a force control pattern 442 for controlling the force of the hydraulic cylinder device 210, and a fixed pattern 443 for stopping the expansion/contraction of the hydraulic cylinder devices 210, 310. The position determination pattern 441 is used in a position determination mode A described later to determine the amount of projection of the rod 312 of the hydraulic cylinder device 310. The force control pattern 442 is used in a force control mode B described later to determine the amount of projection of the rod 212 of the hydraulic cylinder device 210 in quick response to the detected value of the load cell 226. The fixed pattern 443 is used in a fixed mode C described later to determine the amounts of projection of the rods 212, 312 of the cylinder devices 210, 310. These patterns 441, 442, 443 are preset according to the information on the travel position and speed of the train and are selected according to the position and speed information fed from the operation controller 430.

Based on the patterns 441, 442, 443, the control device 440 outputs target control signals to the hydraulic cylinder devices 210, 310. The force and position deviation signals, obtained by subtracting the valuer detected by the load cell 226 and the measuring devices 250, 350 from the target control signals, are amplified by the amplification circuits 451, 452, 453. According to the amplified electric signals, two solenoid proportional valves 421 and the 4-way servo valve 411 are operated to vertically expand or contract the hydraulic cylinder devices 210, 310, 310.

**Table 1**

| | | | Mode | | |
|---|---|---|---|---|---|
| | Traveling condition | | A | B | C |
| | | | Positioning control | Force control | Fixed control |
| 1 | Bright section | Between repair shop and main (h* = 4,700 mm) | o | | |
| 2 | | Main track (h* = 4,800-5,300 mm) | o | o | |
| 3 | | When current is not collected (h* = 4,500 mm) | o | | o |
| 4 | Tunnel section | Entrance and exit section | | | o |
| 5 | | Other sections | o | o | |
| 6 | Others | Measure against fail | | | o |
| 7 | | Gust (30 m/s) | | | o |

Table 1 shows the contents of control performed by the control device 440 according to the traveling conditions.
(1) In a bright section (non-tunnel section), from repair shop to main line, only the hydraulic cylinder device 310 is position-controlled and the rod 212 of the hydraulic cylinder device 210 is set at the lowest position. The control device 440 outputs to the hydraulic cylinder device 310 the height determined based on the height of the trolley wire measured beforehand as the position determination pattern 441 and changes the amount of projection of the rod 312. Because the traveling speed is low, the contact strip 110 and the wing-shaped collector head 120 are not subjected to lift variation, so that the contact strip 110 can be set to a fixed height and collect electric current well.
(2) In a bright section on a main track, the hydraulic cylinder device 310 is position-controlled and the hydraulic cylinder device 210 is force-controlled to press the contact strip 110 against the trolley wire 51 with a specified force. That is, in main tracks, the height of the trolley wire 51 varies greatly in a 4,800-5,300 mm range and thus it is necessary to control the cylinder devices according to the height variations. The cylinder devices 210, 310 have strokes of 100 mm and 700 mm, respectively. The control device 440 therefore outputs to the hydraulic cylinder device 310 the target height based on the trolley wire height measured beforehand as the position determination pattern 441 to position the contact strip 110 at a height close to that of the trolley wire 51 at the travel position. The contact strip 110 and the wing-shaped collector head 120, however, are subjected to lift variation and the height of the trolley wire also changes as the train travels. To cope with this situation, the contact force is measured with the load cell 226, and the hydraulic cylinder device 210 is controlled so as to keep the contact force at a specified value. This allows the contact strip 110 to be pressed against the trolley wire 51 with a specified constant force, preventing the contact strip 110 from parting from or breaking the trolley wire 51. The hydraulic cylinder device 210 is operated according to the estimated height of the trolley wire 51 taken as a reference. Because the stroke of the hydraulic cylinder device 210 is small, the contact strip 110 can be raised or lowered to the height of the trolley wire 51 quickly. The frequency of the raise/lower operations of the hydraulic cylinder device 310 is by far lower than that of the hydraulic cylinder device 210. Because the amount of projection of the rod 312 of the hydraulic cylinder device 310 enables the hydraulic cylinder device 210 to raise/lower, the amount of projection is determined considering this function. It is for example, set to "-50 mm".
(3) In a bright section as in a repair shop, when the train is not collecting electric current, the hydraulic cylinder device 310 and the hydraulic cylinder device 210 are position-controlled to lower the rods 212, 312, 312 to their lower ends and then the solenoid check valve 413 is closed.
(4) In a tunnel section, when the train is traveling at high speed, the cylinder devices 210, 310 are controlled to change the height of the contact strip 110 to the reference height (5,000 mm) of the trolley wire 51 and keep the height for a specified time duration immediately after the current collecting equipment 100 has entered the tunnel or immediately after it has come out of the tunnel. This control is called a fixed mode. That is, the rod 212 of the hydraulic cylinder device 210 is lowered to the lowest position and then all the solenoid check valves 413 of the hydraulic cylinder device 210 are closed to stop the force control. At the same time, the hydraulic cylinder device 310 is operated to set the contact strip 110 to the reference height (5,000 mm) and then all the solenoid check valves 413 of the hydraulic cylinder device 310 are closed to stop the position control. Dring this specified time, since a very large lift variation is produced, position control and force control may break the trolley wire 51 or the contact strip may part greatly from the overhead wire. This danger can be prevented because the raising/ lowering operation of the cylinder devices 210, 310 is stopped and because the cylinder devices are of hydraulic type. Further, since the contact strip 110 is positioned at the reference height, it can almost follow the variation, if any, in the height of the trolley wire 51. Generally it takes a short time to pass a tunnel section and the other current collecting equipment 100 is not operating in the fixed mode, so that the current collection can be performed well. The position of a tunnel can be identified by detecting a position signal from the ground.
   The specified duration in which operation in the fixed mode C is performed immediately after the current collecting equipment has entered or come out of the tunnel may include a certain length of time immediately before it. In the above embodiment, the contact strip 110 is fixed to the reference height of the trolley wire 51 for a specified duration. It is also possible to stop the vertical motion immediately before it enters the specified duration. While the fixed mode C is defined by the length of time, it may also be defined as a specified section immediately after the current collecting equipment has entered or come out of a tunnel. This section can be identified by detecting a position signal sent from the ground side. It can also be recognized by measuring the distance traveled.
(5) In other parts than the tunnel section where the train travels at high speed, the position determination control and the force control are performed as in (2).
(6) When the control device 440 fails or when any of the sensors 226, 250, 350, 414 fail, the hydraulic cylinder devices 210, 310 are set in the fixed mode C to prevent possible breakage of the trolley wire 51 by excess protrusion of the rods 212, 312.
(7) When a gust is blowing, the cylinder devices 210, 310 are set in the fixed mode C. The object is to protect the trolley wire 51 from being broken by an excess lift. The gust is detected by information from the ground station.

In the fixed mode C of (6) and (7), the traveling speed is low as when the train is traveling between a repair shop and a main track. A driver can manually move the contact strip 110 to the reference height. In the fixed mode of (6) and (7), because the train travels at slow speed, the cylinder devices 210, 310 do not need to be fixed and the contact strip 110 may be set to the pre-stored height of the trolley wire 51 measured by the measuring devices 250, 350. Particularly in a section between a repair shop and a main track, the control is performed in the position determination mode A of (1).

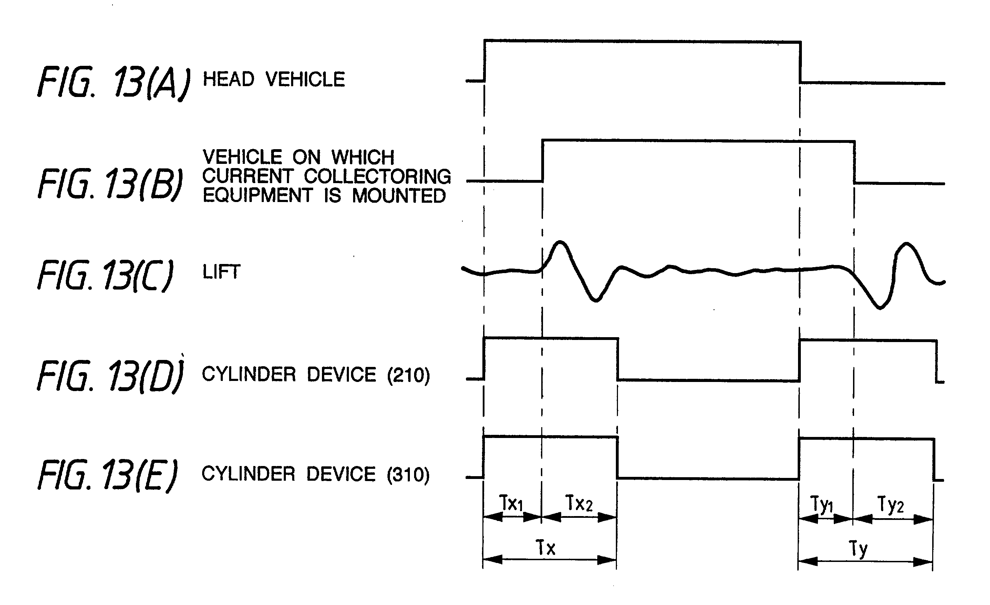

The fixed mode C in the tunnel section of Table 1 will be described referring to Figure 13. In Figure 13, a waveform (A) is a position pulse when the head vehicle of the train passes through a tunnel. A waveform (B) is a position pulse when the vehicle on which the current collecting equipment 100 is mounted passes through the tunnel. A waveform (C) is an example of the waveform of a lift acting on the collector head 120 of the current collecting equipment 100 when the vehicle body 31 on which the current collecting equipment 100 is mounted passes through the tunnel. A waveform (D) shows a timing when the hydraulic cylinder device 210 is set to the fixed mode. A waveform (E) shows a timing when the hydraulic cylinder device 310 is set to the fixed mode. The periods at the high-levels of waveforms (D) and (E) represent the periods when the cylinder devices 210, 310 are set in the fixed mode C. Here, it is assumed that there is only one vehicle having a current collecting equipment 100 (hereinafter referred to as an equipped vehicle).

The equipped vehicle enters a tunnel a Tx1 time after the head vehicle has entered the tunnel. For the next Tx2 duration there is a large lift variation acting on the collector head 120 of the equipped vehicle. A Ty1 time after the head vehicle comes out of the tunnel, a large variation is produced in the lift of the collector head 120. This lift variation continues for a duration of Ty2. These times Tx1, Tx2, Ty1, Ty2 vary depending on the distance from the head vehicle to the equipped vehicle and on the traveling speed. It is possible to operate the hydraulic cylinder device 210 also during the periods Tx2, Ty2 when a large lift variation occur. Because a large force acts at high frequency, the cylinder devices 210, 310 need to have large diameters and to be vertically moved at high speed. Hence, during these periods, the cylinder devices 210, 310 are fixed and not operated vertically. Although wire-parting (the contact strip 110 parts from the trolley wire 51) may occur, the current can be collected because two current collecting equipments are provided. Immediately before the periods Tx2, Ty2, the cylinder devices 210, 310 are fixed to prevent delay in fixation. The lengths of the periods Tx1, Ty1 can be set arbitrarily and the fixed mode can be started before the equipped vehicle enters or comes out of the tunnel. The position information on the tunnel is received from the operation controller 430. The cylinder devices 210, 310 are of hydraulic type using non-compressible oil, so that their position can be maintained even if there are large lift variation caused by strong wind.

In the section of (5) after the current collecting equipment 100 has entered the tunnel until it comes out of the tunnel, both the position control and the force control are performed.

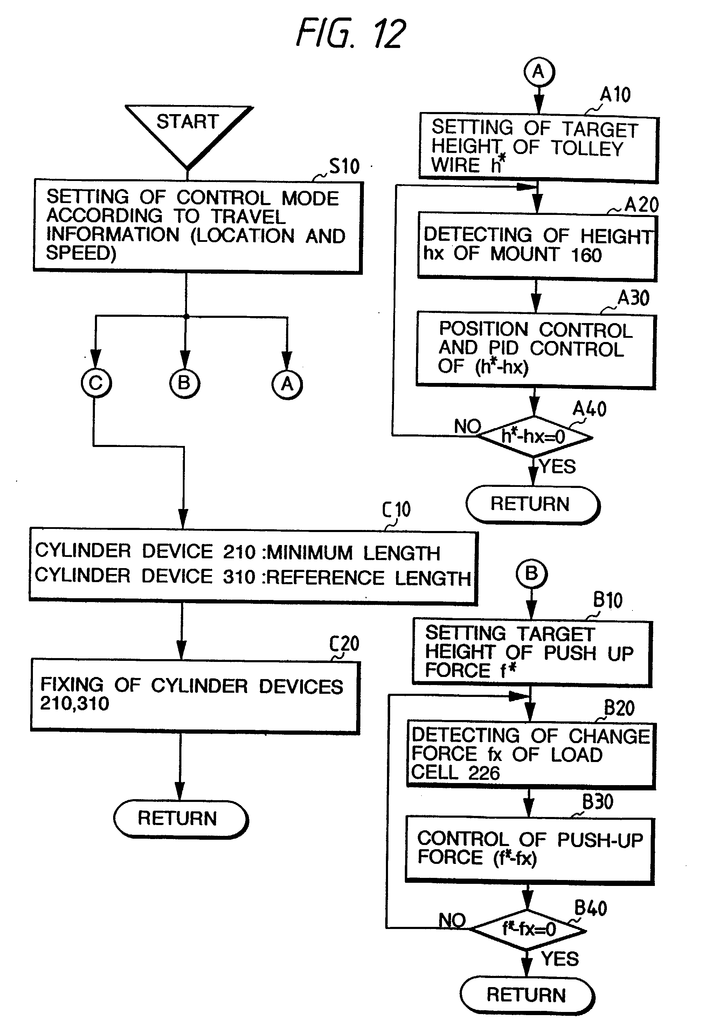

Referring to Figure 12 the control flow chart of the control device 440 will be explained. After initial setting of the control device 440 and the hydraulic circuit, information on location (bright section, or tunnel section) and traveling speed (low speed, or high speed) is received from the operation controller 430, and then the three modes (mode A, mode B, mode C) shown in Table 1 are set (step S10). The operation is executed in accordance with the steps A10-A40, B10-B30, C10 of each mode. Mode A and mode B are sometimes executed at the same time.

In the case of the position determination control mode A:

Step A10: From a predetermined target height from the track 50 to the trolley wire 51, a target position value h* of the hydraulic cylinder device 310 is set according to the position information.

Step A20: The present height hx of the mount 160 is continually detected from the value of the measuring device 350.

Step A30: After the position deviation (h*-hx) is calculated, the position control of the hydraulic cylinder device 310 is performed with PID (proportion, integration and differentiation) compensation to bring the contact strip 110 into contact with the trolley wire 51 and obtain a signal from the load cell 226. In this case, the control is so made that the contact force of the contact strip 110 against the trolley wire 51 is about 100 N.

Step A40: When (h*-hx) is almost zero, the operation returns to step S10.

In the case of the force control mode B:

Step B10: A predetermined target push-up force f* determined according to the position information is set as a target push-up force f* for the hydraulic cylinder device 210.

Step B20: The push-up force fx is detected by tile load cell 226.

Step B30: Using the detected push-up force fx, a contact force f (= fx-m1 1"-m3 3"-fq) acting between the trolley wire 51, the contact strip 110 (mass m1, acceleration y1") and the collector head 120 (mass m3, acceleration y3") is calculated to estimate the state. Although a lift fq is not directly detected, it is estimated. Then, by using the push-up force deviation (f*-f), a feedback control of push-up force is performed for the hydraulic cylinder device 210 to bring the collector head 120 into contact the trolley wire 51 following up the trolley wire 51. This minimizes the contact force variation to a sufficiently small value so that the contact strip 110 does not easily part from the trolley wire 51 even when the contact force varies greatly due to variation of the height of the trolley wire 51.

Step B40: When (f*-f) is equal to almost zero, the control returns to step S10.

In the case of the fixed mode C:

Step C10: A command is sent to the hydraulic cylinder device 210 to make its length minimum and another command is sent to the hydraulic cylinder device 310 to cause the contact strip 110 to be positioned at the reference height.

Step C20: When the measuring devices 250, 350 detect that the cylinder devices 210, 310 are set to the demanded lengths, the solenoid check valve 413 is closed to stop the extension/contraction of the cylinder devices 210, 310.

In this way, the position control according to the variation in the overhead wire height of 800 mm and the push-up force control that suppresses disturbances resulting from the external force on the trolley wire are performed to keep the contact strip 110 in contact with the trolley wire 51 at all times. This improves the overall current collecting performance. Further, because the fixing control is positively performed against disturbances caused by lift variation due to change of the travel track to such as the one in a tunnel, the variation in contact force between the trolley wire 51 and the contact strip 110 can be minimized.

Because the second raise/lower device 300 is vertically raised/lowered and is not laterally moved, the conductive cable 155 can be prevented from being twisted, prolonging its life.

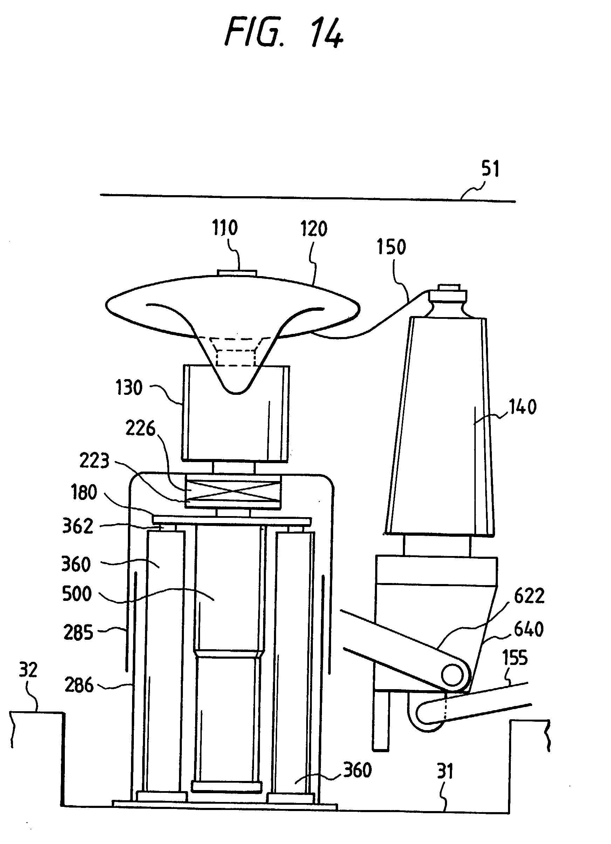

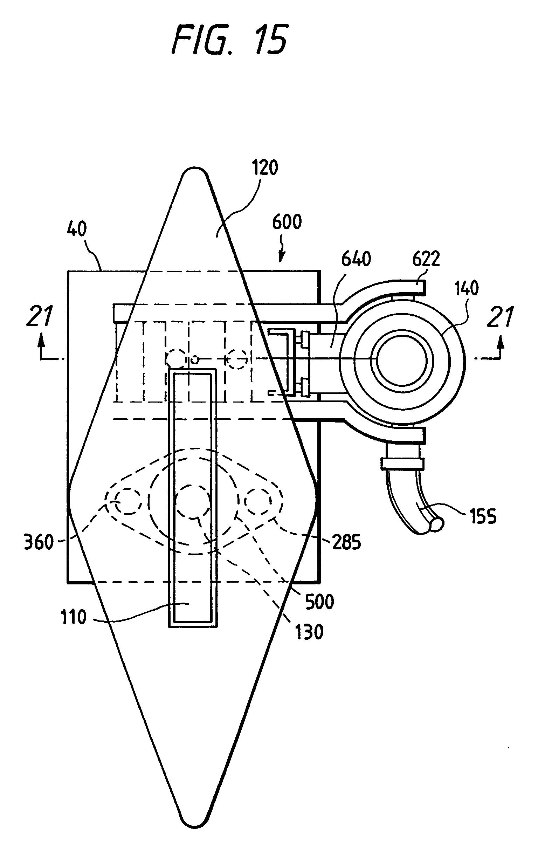

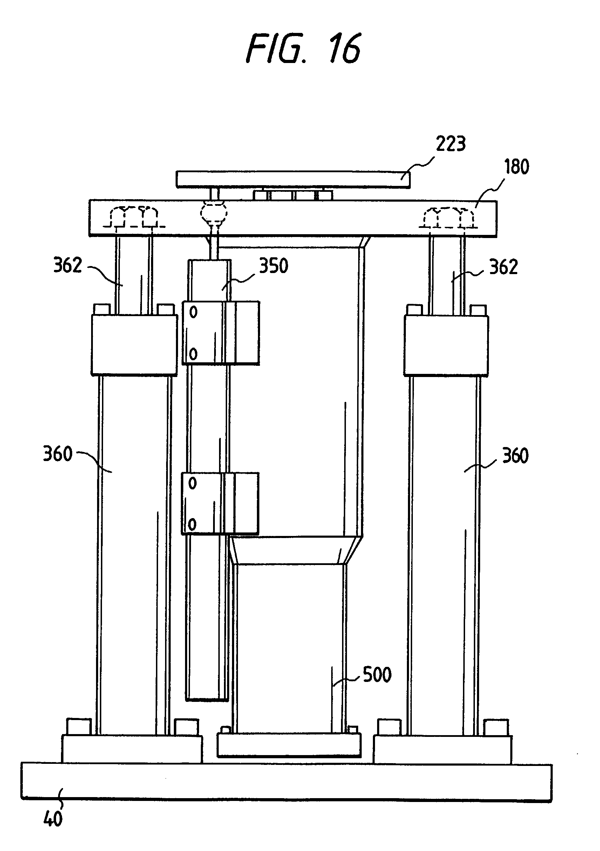

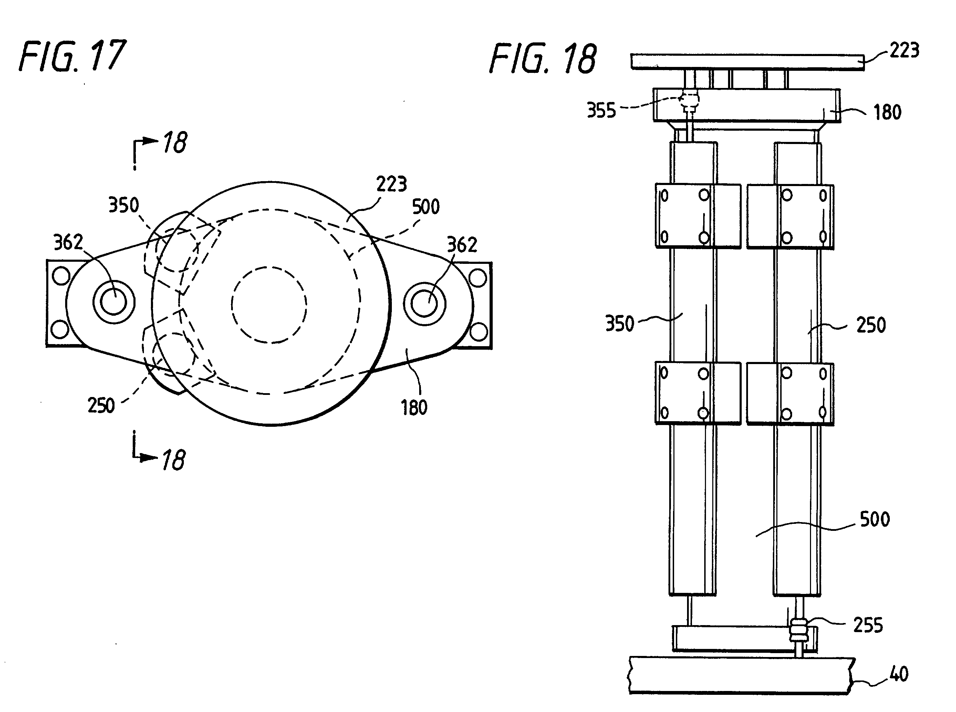

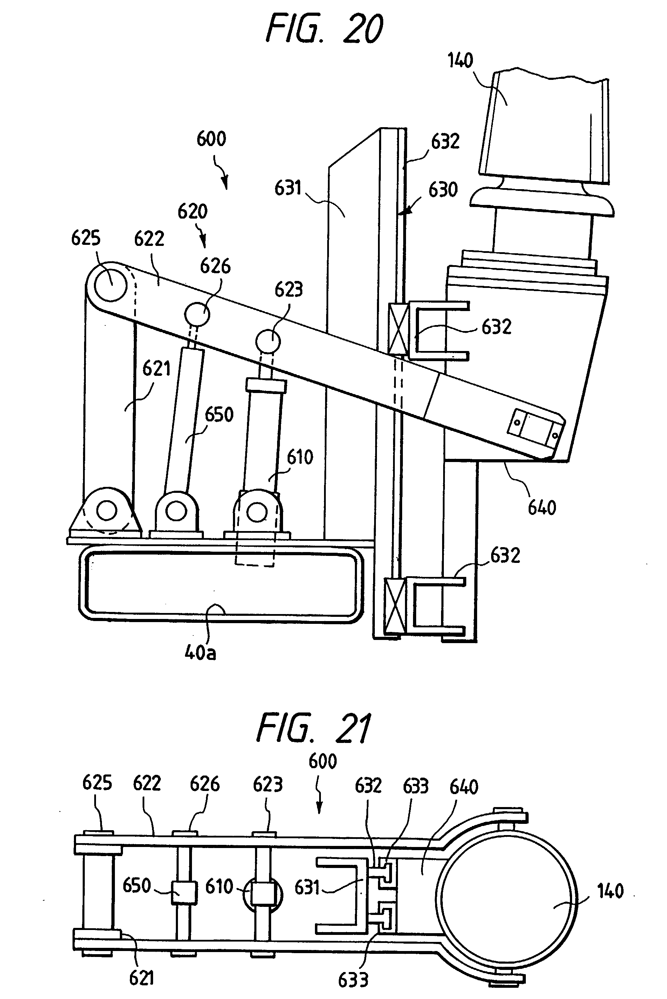

A second embodiment of this invention will be described referring to Figures 14 through 21. This embodiment is intended to reduce the amount of projection of the second raise/lower device 300 into the car body 31 and also minimize the amount of cut in the roof 32, and to simplify the configuration.

In Figures 14 to 19, the second raise/lower device 300 comprises only two hydraulic cylinder devices 360, 360, which are ordinary cylinder devices, having no guide device 320 or linear guide device 335. The lower end of the cylinder device 360 is secured to a mounting seat 40 of the roof 32. A mount 180 is secured to the upper ends of piston rods 362 of the cylinder devices 360. The mount 180 in plan view is oval (elongate in the direction of travel of the train). The two hydraulic cylinder devices 360, 360 are located before and after a first raise/lower device 500 in the direction of train travel. The current collecting equipment 100 is subjected to external force in the direction of travel. Because the two hydraulic cylinder devices 360, 360 are arranged in the direction of travel, the strength of the current collecting equipment in this direction is reinforced eliminating the need for the guide device 320 like in the first embodiment, which simplifies the construction and makes for the cost reduction. No special member is provided to support the upper ends of the hydraulic cylinder devices 360, 360 in the lateral direction of the vehicle body 31. If the support is necessary, the upper end of the cylinder and the seat projecting upward in a cover 285 from the mounting seat 40.

The raise/lower device 500 corresponding to the first raise/lower device 200 is located midway between the two hydraulic cylinder devices 360, 360. The raise/lower device 500 is secured to and suspended from the mount 180. The lower end of the raise/lower device 500 is not fixed to the roof 32.

The cover 285 below the insulation insulator 130, corresponding to the cover 265 of the first embodiment covers the sides of the mount 180, the raise/lower device 500 and the hydraulic cylinder devices 360, 360. A cover 286 is oval in plan view and corresponds to the cover 260 of the first embodiment.

A measuring device 350 is arranged between the side of the raise/lower device 500 and the mounting set 223. A measuring device 250 is arranged between the side of the raise/lower device 500 and the mounting seat 40. An iron rod of the measuring device 250 passes through the mount 180. The measuring devices 250, 350 are located between the cylinder device 360 and the raise/ lower device 500 and on both sides of a line connecting them. This arrangement can reduce the overall size of the equipment. Designated 255 and 355 are ball joints connecting the cylinder and the rod to allow their misalignment.

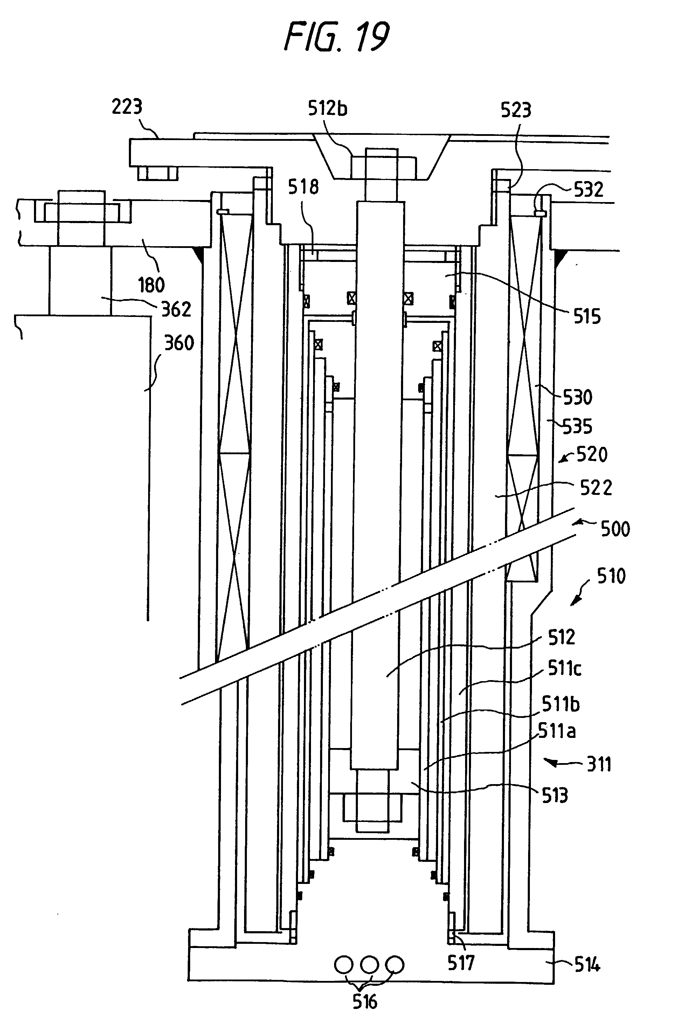

Now, referring to Figure 19, the detail of the raise/lower device 500 will be described. The raise/lower device 500 comprises a hydraulic cylinder device 510 corresponding to the hydraulic cylinder device 210 of the first embodiment and a guide device 520 corresponding to the guide device 220. The hydraulic cylinder device 510 has three fluid ports 516 formed in the side wall of a cylinder head 514 of a cylinder 511 on the piston 513 side. The cylinder 511 comprises three cylinders, and an inner cylinder 511a is an ordinary cylinder provided with a piston 522 and a rod 512. One of the fluid ports 516 in the cylinder head 514 communicates with the interior of the inner cylinder 511a. The space between the inner cylinder 511a and an intermediate cylinder 511b is a passage that connects a chamber on the rod 512 side and one of the oil ports 516. The space between the intermediate cylinder 511b and an outer cylinder 511c is a drain passage for fluid leaking from between a cylinder head 515 on the rod 512 side and the rod 512. This drain passage is connected to another oil ports 516. The cylinder head 514 is screwed inside the outer cylinder 511c and fixed by fixing nuts 517. The cylinder head 515 is screwed inside the outer cylinder 511 c and fixed by fixing nuts 518. The inner cylinder 511a and the intermediate cylinder 511b are clamped by raised portions of the two cylinder heads 514, 515. Oil seals are installed at contact portions between the cylinder heads 514, 515, the cylinders 511a, 511b, 511c and the rod 512. The rod 512 passes through the mount 180 and is secured to an upper mounting seat 223 by screws 512b. The construction above the mounting seat 223 is similar to that of the first embodiment. As will be seen from the above, the hydraulic cylinder device 510 is almost the same in construction as the hydraulic cylinder device 210 of the first embodiment.

A cylinder 522 guided by a linear guide device 530 of the guide device 520 (corresponding to the linear guide device 330 of the first embodiment) is fixed to the mounting seat 223 by screws and fixing nuts 523. The bottom of the cylinder 522 is open. The cylinder 515 accommodating a linear guide device 550 is to the mount 180 by welding. The linear guide device is fixed by a stop ring 532. A cylinder 535 is secured to the cylinder head 514 with bolts and nuts (not shown). While in the first embodiment, the bottom of the cylinder 235 of the first raise/lower device 200 is secured to the mount 160, the top of the cylinder 535 corresponding to the cylinder 235 is secured to the mount in the second embodiment.

By this construction, when the rod 512 is projected, the mounting seat 223 rises. Because the raise/lower device 500 is suspended from the mount 180 driven by the hydraulic cylinder devices 360, 360, when the current collecting equipment 100 is lowered, the hydraulic cylinder devices 360, 360 and the raise/lower device 500 become in parallel with each other. Hence, the current collecting equipment 100 can be reduced in height. The mounting seat 40 for mounting the cylinder device 360 of the second raise/lower device to the vehicle body 31 can be set at almost the same height as that of the mounting seat 33 of the first embodiment. This makes it possible to reduce the amount of cut in the roof 32. Further, since the work of connecting the current collecting equipment 100 and the vehicle body 31 can be done only on the roof 32, the mounting as well as maintenance and inspection of the current collecting equipment 100 can be done easily.

Next, the support structure of the conduction insulator 140 will be described referring to Figure 14, 20 and 21. In the second embodiment the conduction insulator 140 can be also provided on the mount 180 as in the first embodiment. In this arrangement, the conduction insulator 140, as it is installed, overhangs greatly from the center of the mount 180, which is not desirable in terms of strength of the cylinder device 360. When the conduction insulator 140 is installed on the mount 180, the collector head 120 is moved vertically by the second raise/lower devices 200, 500, whereas the conduction insulator 140 is not moved vertically. Therefore, the conductive cable 150 is bent as the collector head 120 moves up and down, shortening its life.

The second embodiment is realized to overcome this problem by providing a fourth raise/lower device 600 for vertically moving the conduction insulator 140. This fourth raise/lower device 600 is installed by the side of the raise/lower device 500 and the hydraulic cylinder devices 360, 360. The fourth raise/lower device 600 is operated in accordance with the operation of the cylinder devices 360, 520. With this arrangement, it is possible to reduce the amount of bend of the conductive cable 150 and the frequency of its bending action, thereby improving its life.

The fourth raise/lower device 600 comprises a hydraulic cylinder device 610, a link mechanism 620 rotated by the hydraulic cylinder device 610 and a guide device 630 that guides a support mount 640 for the conduction insulator 140 vertically. The link mechanism 620 comprises a first link 621 attached vertically to the mounting seat 40 and a second link 622 attached horizontally to the front end of the first link 621. The end of the second link 622 is rotabably connected to the support mount 640. The links 621, 622 are rotatable relative to the mounted objects. The hydraulic cylinder device 610 is located between the second link 622 and the mounting seat 40a. The links 621, are each 622 made up of two components each in the link mechanism 620 and they can be seen from above. The links 622 are connected to both sides of the support mount 640. A shaft 623 connecting the two links 622 is coupled to a piston rod of the hydraulic cylinder device 610. Denoted 625 is a shaft that connects the links 621, 622. The mounting seat 40a is placed on the mounting seat 40. The construction of the support mount 640 is similar to that of 175 of the first embodiment.

The guide device 630 comprises a mounting seat 631 erected on the mounting seat 40a, a guide seat 632, and a guide seat 633 provided on the support mount 640 and engaged with the mounting seat 631. The support mount 640 is vertically guided by the guide seats 632, 633. The guide seats 631, 632 are, for example, known linear guide devices. The guide device 630 is installed in a space enclosed by the hydraulic cylinder device 610, the support mount 640 and the two links 622. By this arrangement, the support mount 640 is vertically moved by the extension/contraction of the hydraulic cylinder device 610.

The conduction insulator 140 needs to be moved vertically according to the total amount of vertical motion of the cylinder device 360 and the raise/lower device 500, that is, according to the position of the contact strip 110. For this purpose, a measuring device 650 is installed to detect the amount of projection of the piston rod of the hydraulic cylinder device 610. The measuring device 650 is located in a space between the first link 621 and the cylinder device 610 and rotatably connected to the second link 622 and the mounting seat 39. The measuring device 650 is similar to the measuring devices 250, 350. The top of the measuring device 650 is rotatably connected to a shaft 626 that connects the two links 622.

The control device 440 determines the height of the contact strip 110 from the values detected by the measuring devices 250, 350 and drives the hydraulic cylinder device 610 so that the height of the conduction insulator 140 corresponds to the calculated value. The hydraulic cylinder device 610 is operated in synchronism with the operation of the hydraulic cylinder devices 360, 360 and the raise/lower device 500. When the contact strip 110 is at a specified height (slightly lower than the height of the trolley wire 51 (4,700 mm)), a height command value is sent to the hydraulic cylinder device 610 so that the top of the conduction insulator 140 is lower than the contact strip 110. This is to prevent the top of the conduction insulator 140 from contacting the trolley wire 51. The distance by which the conduction insulator 140 is lower than the contact strip 110 is, for instance, 80 mm. When the height of the contact strip 110 is below the specified height, there is no danger that the contact strip comes into contact the trolley wire 51, so that the top of the conduction insulator 140 may be at the same height as the contact strip 110. When the current collecting equipment 100 is lowered to the lowest position, in particular, the top of the conduction insulator 140 is set at the same height as that of the contact strip 110. In this way, the controller controls the hydraulic cylinder device 610.

This arrangement allows the conduction insulator 140 to be moved up and down following the contact strip 110, thereby reducing the bend of the conductive cable 150 and prolonging its life. When the support mount 540 is lowered to the lowest position, the minimum height of the support mount 540 can be lowered, making the size of the fourth raise/lower device 600 smaller. In the above embodiment, the link mechanism 620 may be a parallelogram link, which can either obviate the guide device 630 or simplify its construction.

In each of the above embodiments, though the first and second raise/lower devices each comprise a cylinder device, link mechanisms (for instance, a lifter of pantograph type) may be used instead. If the first raise/lower device is of a pantograph type, a pantography type lifter may be provided on a mount suspended from the mount 180 and a load meter 226 may be mounted on the lifter.

In the above embodiment, a raise/lower command for the first raise/lower device 200 is based on the value detected by the load cell 226. The raise/lower command may be the value detected by a known sensor that measures the distance from the trolley wire 51. The load cell may, as is well known, use optical fibers and be installed on the contact strip 110 side rather than on the conduction insulator 140.

Although the cylinder device 210 of the first raise/lower device 200 and the cylinder device 310 of the second raise/lower device 300 are separate ones, a multi-stage cylinder device may be substituted for the cylinder devices. When the cylinder devices 210, 310 are pneumatic cylinder ones, a means is provided that can fix the amount of projection of the rod during the operation in the fixed mode C. It may, for example, be a means for gripping the rod outside the cylinder.

Further, the current collecting equipment 100 is installed at the longitudinal center of the containment dome 90. Generally square holes are made in the center of the containing dome 90, through which the insulation insulator 130 and the conduction insulator 140 are protruded. This arrangement is almost symmetric in the direction of travel and thus the influences such as of noise caused when the train travels in either direction can be made almost equal.

## Claims

1. Current collector apparatus for collecting electrical current for a railway train from an overhead conductor wire, having
a contact member (110) for contacting the conductor wire (51),
a first support (120, etc) including an electrical insulator (130) carrying said contact member(110),
a second support (160,180) carrying said first support and carried by a railway vehicle,
first actuating means (200,500) for controlledly moving said first support vertically relative to said second support, and
second actuating means (300) for controlledly moving said second support vertically to said vehicle body.

2. Current collector apparatus according to claim 1, wherein said first support carries a movable cover (265,285) which moves with said first support and covers at least said first actuator (200,500).

3. Current collector apparatus according to claim 2, wherein said movable cover (285) also covers said second support (180).

4. Current collector apparatus according to claim 3, wherein said movable cover (285) has a vertical skirt wall arranged to move telescopically with respect to an upstanding vertical wall (286) fixed to the vehicle body.

5. Current collector apparatus according to claim 4, wherein said movable cover (285) is, as seen in plan view, narrower in the direction transverse to the travel direction than in the direction parallel to the travel direction.

6. Current collector apparatus according to any one of claims 1 to 5, wherein said second support means has an upper part (180) carrying said first actuating means (500), and two support members (362) carrying said upper part (180), said two support members (362) being spaced apart in the travel direction.

7. Current collector apparatus according to claim 6, wherein said two support members (362) are raised and lowered by respective lifting devices (360) also spaced apart in the travel direction.

8. Current collector apparatus according to any one of claims 1 to 7, wherein said contact member (110) is mounted at the upper side of a collector head (120) which is a body having a shape which, as seen in vertical cross-section in the travel directions, is thicker in the centre and tapers towards its ends and, as seen in plan view, has a first axis of symmetry perpendicular to the travel directions and a second axis of symmetry parallel to the travel direction, and on each side of said first axis of symmetry has a central apex so as to present a pair of swept-back leading edges in each travel direction.

9. A method of collecting electrical current for a railway train from an overhead electrical conductor wire (51) by means of a raisable and lowerable contact member (110) which contacts the conductor wire, the contact member being mounted on first actuating means on the train for raising and lowering the contact member, said first actuating means (200,500) being mounted on second actuating means (300) on the train for raising and lowering said first actuating means, the method comprising, while the train is travelling, the steps of
(i) detecting force between the contact member (110) and the conductor wire (51) and operating said first actuating means in dependence on the detected force, and
(ii) detecting the height position of the contact member (110) and controlling its height position in dependence on the detected height position,
characterised in that said second actuating means (300) is such that its operation maintains the contact member (110) in current-collecting orientation with respect to the conductor wire, and in that while the train is travelling, said second actuating means (300) is operated in dependence on the detected height position.
